(19) **Europäisches Patentamt / European Patent Office / Office européen des brevets**

(11) **EP 3 179 231 B1**

(12) **EUROPEAN PATENT SPECIFICATION**

(45) Date of publication and mention of the grant of the patent:
**07.07.2021 Bulletin 2021/27**

(51) Int Cl.:
**G01N 21/25** (2006.01)

(21) Application number: **16202482.2**

(22) Date of filing: **06.12.2016**

(54) **OPTOELECTRONIC DEVICE FOR USE IN THE COLORIMETRIC ANALYSIS OF A SAMPLE FLUID, APPARATUS AND METHOD FOR COLORIMETRIC ANALYSIS OF A SAMPLE FLUID**

OPTOELEKTRONISCHE VORRICHTUNG ZUR FARBMETRISCHEN AUSWERTUNG EINER PROBENFLÜSSIGKEIT, VERFAHREN UND VORRICHTUNG FÜR FARBMETRISCHE ANALYSE

DISPOSITIF OPTOÉLECTRONIQUE POUR L'ANALYSE COLORIMÉTRIQUE D'UN FLUID D'ESSAI, DISPOSITIF ET MÉTHODE POUR ANALYSE COLORIMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2015 IT UB20156826**

(43) Date of publication of application:
**14.06.2017 Bulletin 2017/24**

(73) Proprietor: **Dnaphone S.r.l.**
**43121 Parma (IT)**

(72) Inventors:
• **CANDIANI, Alessandro**
**43121 PARMA (IT)**

• **TONELLI, Alessandro**
**40065 PIANORO (BO) (IT)**
• **SOZZI, Michele**
**43124 PARMA (IT)**
• **CUCINOTTA, Annamaria**
**43123 PARMA (IT)**
• **SELLERI, Stefano**
**40138 BOLOGNA (IT)**

(74) Representative: **Dondi, Silvia**
**Bugnion S.p.A.**
**Largo Michele Novaro, 1/A**
**43121 Parma (IT)**

(56) References cited:
**GB-A- 2 497 750     US-A1- 2004 157 341**
**US-B1- 6 741 875**

**Description**

The object of the present invention is an optoelectronic device for use in the colorimetric analysis of a fluid sample, an apparatus and method for colorimetric analysis of a fluid sample.

The use of colorimetry for the analysis of compounds is known in the food, biomedical, pharmaceutical and environmental fields.

Moving beyond structurally complex and cumbersome instruments such as spectrophotometers using halogen or deuterium lamps, the focus here is on colorimeters, that is, portable and compact instruments for measuring the absorption of light radiation by the (coloured) sample being examined. To maximize light radiation absorption, the wavelength interval is selected so as to correspond to the region of maximum absorption of the spectrum of the molecule or sample to be analysed.

The essential elements of a portable colorimeter consist of:

- a LED light source;
- a housing for the test tube containing the sample to be analysed;
- a photodiode or photodetector.

To perform a plurality of analyses, this basic system must be replicated, that is, a battery of LEDs, a plurality of housings and relative photodiodes or photodetectors are arranged. In fact, typically a maximum of two measurable wavelengths corresponds to each housing.

Usually filters upstream or downstream of the housings are used to select the wavelengths and/or lenses for collimating the rays.

One of the limits of currently known portable multi-analysis colorimeters lies in the increase in housings when one needs to cover a plurality of wavelengths (a number of readings), with an evident increase in overall dimensions and costs.

Moreover, most of the currently known portable multi-analysis colorimeters are configured in the production stage, without allowing for any future updating or enhancement of the initially provided functions.

Given that power is supplied by means of the mains power supply, the portability of these instruments is also limited.

A more versatile solution has been developed and it is disclosed in document GB 2497750. This solution employs a mobile device (e.g. a smartphone), which acquires images of the samples by means of a camera and performs the relative processing using software loaded thereon.

However, this solution also has a plurality of housings in which to arrange the sample to be analysed (according to the type of analysis).

Other examples of colorimetric devices are given in the patent document US 6,741,875 B1 or in patent document US 2004/0157341 A1). The first document describes an irradiation beam with different spectral components transmitted via a bundle of optical fibres to a mixing device and then to the sample. The second document describes the use of a light guide to create an even illumination distribution of the multi wavelengths illumination beam on the sample.

In this context, the technical task underlying the present invention is to offer an optoelectronic device for use in the colorimetric analysis of a fluid sample, and an apparatus and method for colorimetric analysis of a fluid sample which overcome the drawbacks of the prior art cited hereinabove. In particular, an object of the present invention is to offer an optoelectronic device for use in the colorimetric analysis of a fluid sample which is more compact than prior-art solutions, while also ensuring the possibility of carrying out a plurality of analyses.

Another object of the present invention is to offer an apparatus for colorimetric analysis of a fluid sample, the functions of which can be easily updated, even by non-expert users.

Another object of the present invention is to make available a method for performing the colorimetric analysis of a fluid sample which can be carried out anywhere (not necessarily in clinical laboratories) even by non-expert users.

The defined technical task and the specified objects are substantially achieved by an optoelectronic device for use in the colorimetric analysis of a fluid sample, comprising:

- a housing for the sample;
- a plurality of LED light sources that emit radiation of various wavelengths, ranging between 100 nm and 2 $\mu$m;
- a driving unit for controlling said LED light sources;
- a bundle of optical fibres arranged in such a manner as to receive as input the light radiation emitted by the LED light sources and transmit it towards the housing.

The optoelectronic device comprises a light guide located upstream of the housing with respect to the path of the light radiation coming from the LED light sources. The bundle of optical fibres is interposed between the LED light sources and the light guide. The light guide mixes the various spectral components coming from the LED light sources and supplies a uniform beam as output towards the housing.

In one embodiment, the optoelectronic device comprises a first lens for collimating the light radiation and interposed between the light guide and the housing for the sample.

The device comprises a plurality of micro-lenses afforded on an inlet section of the light guide. The micro-lenses receive radiation from the optical fibres in the bundle.

In one embodiment, the light guide is shaped in the form of a prism that has a first base facing the bundle of optical fibres so as to receive the light radiation as input, and a second base facing the housing of the sample so as to send the light radiation made uniform to the latter.

The light guide is preferably made of silicone or polymethyl methacrylate or polycarbonate or glass.

Preferably, the optical fibres are made of polymethyl methacrylate or silica or soft glass.

The defined technical task and the specified objects are substantially achieved by an optoelectronic apparatus for colorimetric analysis of a fluid sample, comprising:

- the optoelectronic device proposed herein;
- a measurement instrument for measuring light intensity and located downstream of the housing with respect to the path of the light radiation.

For example, the measurement instrument consists in a mobile device that has an optical sensor.

Alternatively, the measurement instrument is a micro-spectrometer.

In one embodiment, the apparatus comprises an additional optical fibre interposed between the housing and the measurement instrument. Preferably, the apparatus comprises a second lens interposed between the housing for the sample and the additional optical fibre.

The defined technical task and the specified objects are substantially achieved by a method for colorimetric analysis of a fluid sample which employs the optoelectronic device described hereinabove.

This method comprises the steps of:

- switching on the LED light sources;
- detecting the light intensity of the radiation downstream of the empty housing;
- inserting the sample in the housing;
- detecting the light intensity of the radiation downstream of the housing in the presence of the sample;
- calculating the absorbance of the sample as a function of the light intensity detected in the absence of the sample and of the light intensity detected in the presence of the sample in the housing.

The method also comprises an initial step of detecting the darkness intensity, while keeping the LED light sources switched off and the housing empty.

Preferably, the step of calculating the absorbance $A_1$ of the sample is obtained by applying the following formula:

$$A_1 = \log_{10} \left( (I_{ref} - I_{dark}) / (I_1 - I_{dark}) \right).$$

In one embodiment, each step of detecting the light intensity downstream of the housing is carried out using a mobile device and comprises the following substeps:

- interposing an additional optical fibre between the housing of the sample and an optical sensor of the mobile device;
- having the optical sensor acquire a colour image from the additional optical fibre;
- extracting the red, green and blue channels from the colour image;
- identifying an area of interest in the image;
- obtaining the light intensity as the mean intensity of the pixels in the area of interest.

In another embodiment, each step of detecting the light intensity downstream of the housing is carried out using a micro-spectrometer having at least one sensor for sensing light intensity and comprises the following substeps:

- having the sensor acquire light intensities corresponding to a plurality of pixels;
- selecting the light intensity corresponding to the wavelength of interest for the colorimetric analysis in progress.

Further characteristics and advantages of the present invention will become more apparent from the approximate and thus non-limiting description of a preferred, but not exclusive, embodiment of an optoelectronic device for use in the colorimetric analysis of a fluid sample, and of an apparatus and method for colorimetric analysis of a fluid sample, as illustrated in the accompanying drawings, of which:

- figure 1 illustrates an optoelectronic device for use in the colorimetric analysis of a fluid sample, according to the present invention, in a schematic view;
- figures 2a and 2b illustrate one element (a light guide) in the optoelectronic device appearing in Figure 1, in a perspective view, in two different embodiments;
- figure 3 illustrates a first embodiment of an apparatus for colorimetric analysis of a fluid sample, according to the present invention, in a schematic view;
- figure 4 illustrates a second embodiment of an apparatus for colorimetric analysis of a fluid sample, according to the present invention, in a schematic view.

With reference to the figures, the number 1 indicates an optoelectronic device for use in the colorimetric analysis of a fluid sample.

For example, the sample may be a food substance (such as oil, wine, or beer) or a biological fluid (such as blood, plasma, saliva, or urine). The optoelectronic device 1 can also be employed for the analysis of a liquid extracted from a solid matrix (e.g. fruit, a vegetable, an egg, or cereal) using known extraction methods.

The optoelectronic device 1 comprises a housing 2 for the sample.

The sample is preferably contained in a cuvette (unillustrated).

In this context, the term "cuvette" indicates the container for the sample to be analysed.

The optoelectronic device 1 comprises a plurality of LED light sources 4 (herein below abbreviated as LED sources) that emit radiation of various wavelengths ranging between 100 nm and 2 $\mu$m.

In particular, the LED sources 4 emit light radiation in the visible region of the spectrum and partially in the ultraviolet region. The LED sources 4 can also emit radiation in the nearby infrared region.

The material constituting the cuvette is selected as a function of the interval of the wavelengths used for the analysis (the walls of the cuvette must be transparent to the radiation that passes through them so as not to affect the analysis) and of the nature of the sample to be contained therein.

A driving unit for controlling the LED sources 4 is also present.

In particular, the driving unit is part of an electronic board 5.

The LED sources 4 are mounted on the electronic board 5.

The optoelectronic device 1 comprises a bundle of optical fibres 6, which departs from the LED sources 4, and a light guide 7.

Preferably, the optical fibres 6 are made of polymethyl methacrylate (known by the acronym PMMA) or silica or soft glass. In this sector, it is known that fibres made of soft class are fibres made of silica with a high concentration of dopant (e.g. tellurite, phosphorus, fluorite, boron, etc.). For example, the optical fibres 6 have a diameter in the range of 125 $\mu$m to 1 mm.

The bundle of optical fibres 6 is interposed between the LED sources 4 and the light guide 7 so as to receive as input the light radiation emitted by the LED sources 4 and transmit it towards the light guide 7.

The light guide 7 has an inlet section 7a facing the bundle of optical fibres 6 and comprising a plurality of micro-lenses 14 that receive the radiation from the optical fibres 6 in the bundle. The micro-lenses 14 have the function of improving radiation distribution in the light guide 7. In particular, the micro-lenses 14 are afforded on the inlet section 7a.

In particular, the optical fibres 6 are bundled together by means of a band 11 that is fixed to the light guide 7.

In particular, the band 11 is made of aluminium or brass.

The light guide 7 is located upstream of the housing 2 with respect to the path of the light radiation coming from the LED sources 4. In this manner, the light guide 7 mixes the various spectral input components (coming from the LED sources 4) and enables a uniform beam to be obtained as output towards the housing 2.

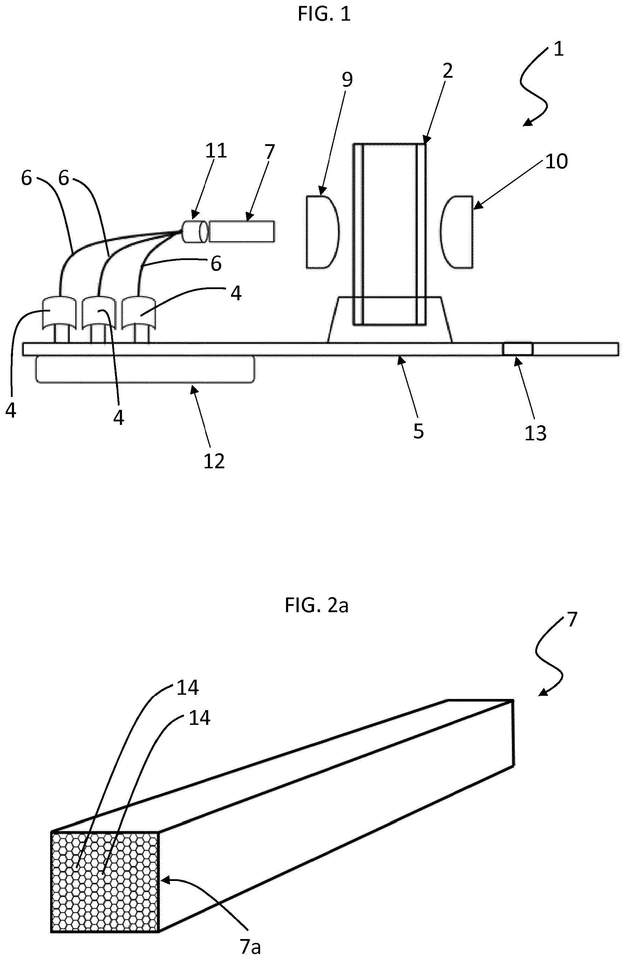

The light guide 7 is preferably shaped in the form of a prism (Fig. 2a) that has a first base facing the bundle of optical fibres 6 so as to receive the light radiation as input, and a second base facing the housing 2 for the sample so as to send the light radiation made uniform to the latter. In this embodiment, the first base constitutes the inlet section 7a. Micro-lenses 14 are preferably afforded on the first base 7a.

The choice of the prism is particularly suited for mixing the various spectral input components and supplying a uniform beam as output.

The band 11 bundling the optical fibres 6 is fixed or located in the proximity of the first base 7a of the light guide 7.

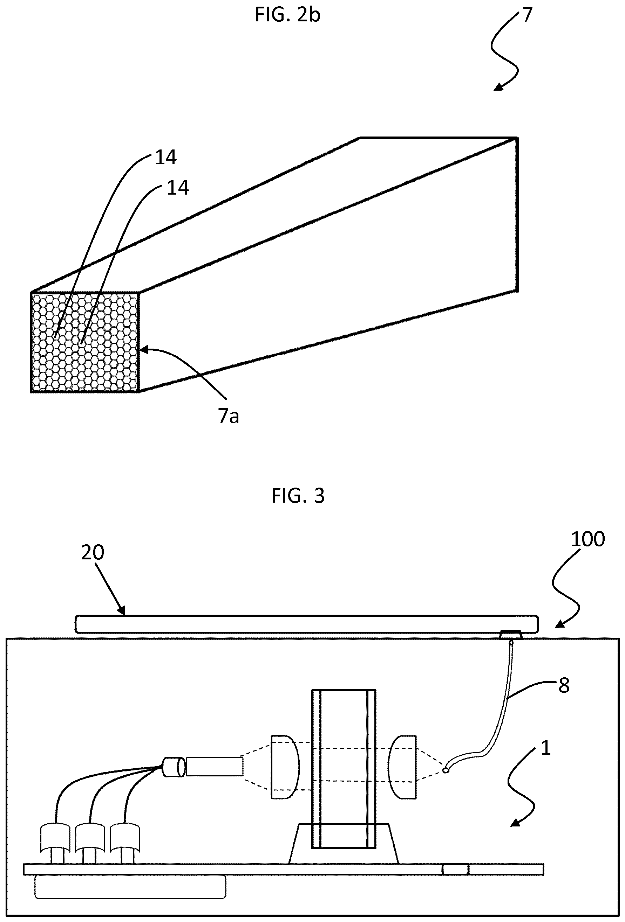

In a variant embodiment illustrated in figure 2b, the light guide 7 is shaped in the form of a truncated pyramid, in which the smaller base faces the bundle of optical fibres 6 and receives the light radiation as input, whereas the larger base faces the housing 2 for the sample and sends the light radiation made uniform to the latter.

For example, the smaller base and the larger base of the truncated pyramid are polygons having three or more sides.

In this variant embodiment, the band 11 bundling the optical fibres 6 is located in the proximity of the smaller base of the light guide 7.

The embodiment with the truncated pyramid has the advantage of achieving an angle of emission (for light radiation from the larger base) that is smaller than the input angle at the smaller base.

In this manner, the coupling efficiency regarding a first lens 9 is increased; the first lens 9 is explained further herein below.

In an additional variant embodiment, the light guide 7 is shaped in the form of a truncated cone.

Preferably, in all the variant embodiments the light guide 7 is made of silicone or PMMA or polycarbonate.

Alternatively, the light guide 7 is made of glass or quartz. The optoelectronic device 1 preferably comprises a first lens 9 for collimating the light radiation and it is interposed between the light guide 7 and the housing 2.

The first lens 9 is preferably made of PMMA or silica or silicone or polycarbonate or NBK7.

The optoelectronic device 1 is preferably powered by a battery 12.

A socket may also be present for connection to the mains power supply. Preferably, the optoelectronic device 1 is provided with a network communication interface 13 (e.g. Wi-Fi or Bluetooth).

Preferably, this interface 13 is integrated in the electronic board 5.

With reference to the figures, the number 100 indicates an apparatus for colorimetric analysis, comprising the optoelectronic device 1 and a measurement instrument 20 for measuring light intensity and located downstream of the housing 2 with respect to the path of the light radiation.

In a first embodiment, which is illustrated in figure 3, the measurement instrument 20 consists in a mobile device that has an optical sensor. The mobile device 20 is preferably a smartphone or a tablet.

The optical sensor is the sensor of a camera in the mobile device 20. Preferably, in this first embodiment, an additional optical fibre 8 is provided and it is interposed between the housing 2 for the sample and the mobile device 20.

The additional optical fibre 8 is preferably made of plastic or silica or soft glass. For example, the diameter of the additional optical fibre 8 is greater than or equal to 1 mm. Preferably, there is a second lens 10 and it is interposed between the housing 2 and the additional optical fibre 8.

The second lens 10 is preferably made of PMMA or silica or silicone or polycarbonate or NBK7.

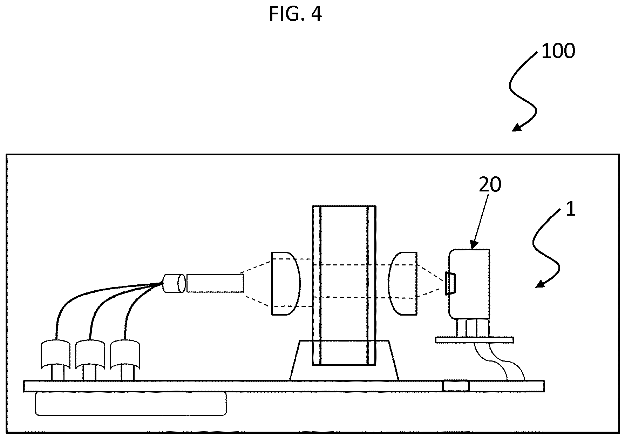

In a second embodiment, which is illustrated in figure 4, the measurement instrument 20 is a micro-spectrometer of a known type.

The method for performing colorimetric analysis of a fluid sample according to the present invention is described below with reference to the embodiment that employs the mobile device 20.

Preferably, data acquisition is provided for at the beginning of the analysis, while keeping the LED sources 4 switched off and the housing 2 empty. In fact, the darkness intensity $I_{dark}$ is detected, that is, the "noise" due to the optical sensor when everything is off.

Subsequently, the LED sources 4 are switched on and one proceeds with detection of the light intensity $I_{ref}$ of the radiation from the additional optical fibre 8, again with the housing 2 being empty.

Preferably, adjustment of the light intensity of the LED sources 4 is provided for, up to an $I_{ref}$ value higher than or equal to a predetermined minimum value, before continuing on with the subsequent steps.

One then proceeds with insertion of the sample in the housing 2. Therefore, the cuvette containing the sample is positioned in the housing 2.

In this context, it is understood that the sample is the substance (molecule) being subjected to colorimetric analysis. This sample can be diluted in a solution.

At this point, with the LED sources 4 switched on and the sample in the housing 2, the light intensity $I_1$ of the radiation from the additional optical fibre 8 is detected.

Starting from the detected light intensities, the absorbance $A_1$ of the sample is calculated.

In particular, the absorbance $A_1$ of sample is calculated by applying the following formula:

$$A_1 = \log_{10} ((I_{ref} - I_{dark}) / (I1 - I_{dark})).$$

Calculation of the absorbance is carried out in the measurement instrument 20.

The concentration of the sample in the solution is obtained for example by extrapolation, starting from a curve preloaded in the measurement instrument 20 (for example, the memory of the mobile device 20). There are other prior-art techniques based on calibration curves with samples having known concentrations from which to derive unknown concentration values.

According to the analysis to be performed, it is possible to switch on only some of the LED sources 4 and add one or more reagents to obtain a solution.

In this case, one proceeds with:

- detection of the light intensity in the presence of the various reagents;
- calculation of the absorbance of the solution in the presence of the various reagents (as a function of the detected light intensities);
- calculation of the absorbance of the sample (substance or molecule of interest) at the end of all the reactions;
- calculation of the concentration.

The various steps of detecting light intensity can be carried out using the mobile device 20 (figure 3) or the micro-spectrometer 20 (figure 4).

In the case of the mobile device 20, the additional optical fibre 8 is set in communication with the optical sensor of the mobile device 20.

The optical sensor thus acquires a colour image from the additional optical fibre 8. The red, green and blue channels are extracted from the colour image. In the field of image processing, this is known as RGB channel extraction (RGB being the acronym for Red-Green-Blue).

The area of interest in the image is then identified and the light intensity is calculated as the mean intensity of the pixels in the area of interest. Algorithms and formulas of known types, beyond the scope of the present invention, are applied for RGB channel extraction and for subsequent processing and calculations.

In the second embodiment of the apparatus as well, it is possible to employ the additional optical fibre 8, which is connected to the opening in the micro-spectrometer 20.

Prior to the actual colorimetric analysis, a temperature-control and calibration step is comprised, the description of which lies beyond the scope of the present invention.

In the embodiment that employs the micro-spectrometer 20, one proceeds with detection of the light intensity using a light intensity sensor in the micro-spectrometer 20.

In particular, the sensor acquires the light intensities corresponding to a plurality of pixels, preferably in the range of 350-815 nm.

Based on the colorimetric analysis being carried out, for which a preestablished wavelength must be detected, the corresponding light intensity is selected.

For example, in the case of the analysis of sulphur dioxide in a sample of wine, 405 nm is used.

The characteristics of an optoelectronic device for use in the colorimetric analysis of a fluid sample, and of an apparatus and method for colorimetric analysis of a fluid sample, according to the present invention, prove to be clear from the description provided, as do the advantages thereof.

In particular, the proposed optoelectronic device makes it possible to carry out a plurality of analyses as a function of the preselected sample without having to arrange a plurality of housings and photodetectors as is the case in the solutions of the prior art. In fact, each housing is capable of covering a plurality of wavelengths, for example wavelengths in the visible region of the spectrum, partially in the ultraviolet region and/or in the nearby infrared region.

The proposed device is thus compact and structurally simple.

Furthermore, the possibility of connecting the optoelectronic device to a mass-market mobile device - such as smartphones or tablets - makes it possible to perform such analyses anywhere even by users with little experience.

The apparatus for colorimetric analysis comprising the mobile device is particularly versatile in that the software loaded in the mobile device can permit a wide variety of image processing possibilities for the acquired images.

Furthermore, the software loaded in the mobile device can be updated and enhanced, making it possible expand the analyses that can be performed. Owing to the fact that it is powered by a battery, rather than by means of the mains power supply, the optoelectronic device proposed here is independent.

Lastly, the presence of a network communication interface (e.g. Wi-Fi or Bluetooth) enables the device to interact with other devices such as temperature or pH detection probes.

**Claims**

1. Apparatus (100) for colorimetric analysis of a sample fluid, comprising:

   an optoelectronic device (1) comprising:

   - a housing (2) for said sample fluid;
   - a plurality of LED light sources (4) that emit radiation of various wavelengths, ranging between 100 nm and 10 $\mu$m;
   - a driving unit for controlling said LED light sources (4);
   - a bundle of optical fibres (6) arranged in such a way as to receive as input the light radiation emitted by the LED light sources (4) and transmit it to towards said housing (2); and

a measurement instrument (20) for measuring light intensity and located downstream of the housing (2) with respect to the path of the light radiation,

**characterised in that** said optoelectronic device (1) further comprises:

- a light guide (7) located upstream of said housing (2) with respect to the path of the light radiation coming from the LED light sources (4), said bundle of optical fibres (6) being interposed between the LED light sources (4) and said light guide (7), said light guide (7) mixing the various spectral components coming from the LED light sources (4) and supplying a uniform beam as output towards said housing (2);
- a plurality of micro-lenses (14) obtained on an inlet section (7a) of said light guide (7), each one of said micro-lenses (14) receiving radiation from one of said optical fibres (6) in the bundle.

2. Apparatus (100) for colorimetric analysis according to claim 1, wherein said optoelectronic device (1) further comprises a first lens (9) for collimating the light radiation and interposed between the light guide (7) and the housing (2) of said sample.

3. Apparatus (100) for colorimetric analysis according to claim 1 or 2, wherein said light guide (7) is shaped in the form of a prism that has a first base facing the bundle of optical fibres (6) so as to receive the light radiation as input, and a second base facing the housing (2) of said sample so as to send the light radiation made uniform to the latter.

4. Apparatus (100) for colorimetric analysis according to claims 1 to 3, wherein said light guide (7) is made of silicone or polymethyl methacrylate or polycarbonate or glass.

5. Apparatus (100) for colorimetric analysis according to any one of the preceding claims, wherein said optical fibres (6) are made of polymethyl methacrylate or silica or soft glass.

6. Apparatus (100) for colorimetric analysis according to any one of the preceding claims, wherein said optoelectronic device (1) further comprises a power supply battery (12).

7. Apparatus (100) for colorimetric analysis according to any one of the preceding claims, wherein said measurement instrument (20) consists in a mobile device that has an optical sensor.

8. Apparatus (100) for colorimetric analysis according to claims 1 to 6, wherein said measurement instrument (20) is a micro-spectrometer.

9. Apparatus (100) for colorimetric analysis according to any one of the preceding claims, comprising an additional optical fibre (8) interposed between said housing (2) and said measurement instrument (20).

10. Apparatus (100) for colorimetric analysis according to claim 9, further comprising a second lens (10) interposed between said housing (2) of the sample and said additional optical fibre (8).

11. Method for performing colorimetric analysis of a fluid sample using an apparatus (100) according to any one of claims 1 to 10, comprising the steps of:

switching on the LED light sources (4);
detecting the light intensity ($I_{ref}$) of the radiation downstream of said empty housing (2);
inserting said sample in the housing (2);
detecting the light intensity ($I_1$) of the radiation downstream of said housing (2) in the presence of the sample;
calculating the absorbance ($A_1$) of the sample as a function of the light intensity detected in the absence of the sample and of the light intensity ($I_1$) detected in the presence of the sample in the housing (2).

12. Method according to claim 11, further comprising an initial step of detecting the darkness intensity ($I_{dark}$), while keeping the LED light sources (4) switched off and the housing (2) empty.

13. Method according to claim 12, wherein said step of calculating the absorbance ($A_1$) of the sample (C) is obtained by applying the following formula:

$$A_1 = \log_{10}\left((I_{ref} - I_{dark}) / (I_1 - I_{dark})\right).$$

**14.** Method according to claims 11 to 13, wherein each one of said steps of detecting the light intensity downstream of the housing (2) is carried out using a mobile device (20) and comprises the following substeps:

interposing an additional optical fibre (8) between the housing (2) of the sample and an optical sensor of the mobile device (20);
having said optical sensor acquire a colour image of said additional optical fibre (8);
extracting the red, green and blue channels from said colour image;
identifying an area of interest in the image;
obtaining the light intensity as the mean intensity of the pixels in said area of interest.

**15.** Method according to claims 11 to 13, wherein each one of said steps of detecting the light intensity downstream of the housing (2) is carried out using a micro-spectrometer (20) having at least one sensor for sensing light intensity and comprises the following substeps:

having the sensor acquire light intensities corresponding to a plurality of pixels;
selecting the light intensity corresponding to the wavelength of interest for the current colorimetric analysis.

**Patentansprüche**

**1.** Gerät (100) für die farbmetrische Auswertung einer Probenflüssigkeit, umfassend: eine optoelektronische Vorrichtung (1), umfassend:

- ein Gehäuse (2) für die Probenflüssigkeit;
- eine Vielzahl an LED-Lichtquellen (4), die Strahlung verschiedener Wellenlängen zwischen 100 nm und 10 µm emittieren;
- eine Antriebseinheit zum Steuern der LED-Lichtquellen (4) ;
- ein Bündel von Lichtleitfasern (6), die so angeordnet sind, dass sie die von den LED-Lichtquellen (4) emittierte Lichtstrahlung als Eingang empfangen und sie in Richtung des Gehäuses (2) übertragen; und

ein Messinstrument (20) zum Messen der Lichtintensität, das sich stromabwärts des Gehäuses (2) in Bezug auf den Weg der Lichtstrahlung befindet,
**dadurch gekennzeichnet, dass** die optoelektronische Vorrichtung (1) ferner umfasst:

- einen Lichtleiter (7), der sich stromaufwärts des Gehäuses (2) in Bezug auf den Weg der von den LED-Lichtquellen (4) kommenden Lichtstrahlung befindet, wobei das Bündel von Lichtleitfasern (6) zwischen den LED-Lichtquellen (4) und dem Lichtleiter (7) angeordnet ist, wobei der Lichtleiter (7) die verschiedenen Spektralkomponenten mischt, die von den LED-Lichtquellen (4) kommen, und einen gleichmäßigen Strahl als Ausgang zum Gehäuse (2) liefert;
- eine Vielzahl an Mikrolinsen (14), die an einem Einlassabschnitt (7a) des Lichtleiters (7) ausgebildet sind, wobei eine jede der Mikrolinsen (14) Strahlung von einer der optischen Fasern (6) im Bündel empfängt.

**2.** Gerät (100) für die farbmetrische Auswertung nach Anspruch 1, wobei die optoelektronische Vorrichtung (1) ferner eine erste Linse (9) zum Kollimieren der Lichtstrahlung umfasst und zwischen dem Lichtleiter (7) und dem Gehäuse (2) der Probe angeordnet ist.

**3.** Gerät (100) für die farbmetrische Auswertung nach Anspruch 1 oder 2, wobei der Lichtleiter (7) in Form eines Prismas geformt ist, aufweisend eine erste Basis, die dem Bündel von optischen Fasern (6) zugewandt ist, um die Lichtstrahlung als Eingang zu empfangen und eine zweite Basis, die dem Gehäuse (2) der Probe zugewandt ist, um die gleichmäßige Lichtstrahlung an diese zu senden.

**4.** Gerät (100) für die farbmetrische Auswertung nach den Ansprüchen 1 bis 3, wobei der Lichtleiter (7) aus Silikon oder Polymethylmethacrylat oder Polycarbonat oder Glas besteht.

**5.** Gerät (100) für die farbmetrische Auswertung nach einem der vorhergehenden Ansprüche, wobei die optischen Fasern (6) aus Polymethylmethacrylat oder Siliciumdioxid oder weichem Glas hergestellt sind.

**6.** Gerät (100) für die farbmetrische Auswertung nach einem der vorhergehenden Ansprüche, wobei die optoelektronische Vorrichtung (1) ferner eine Stromversorgungsbatterie (12) umfasst.

7. Gerät (100) für die farbmetrische Auswertung nach einem der vorhergehenden Ansprüche, wobei das Messinstrument (20) aus einer beweglichen Vorrichtung besteht, die einen optischen Sensor aufweist.

8. Gerät (100) für die farbmetrische Auswertung nach den Ansprüchen 1 bis 6, wobei das Messinstrument (20) ein Mikrospektrometer ist.

9. Gerät (100) für die farbmetrische Auswertung nach einem der vorhergehenden Ansprüche, umfassend eine zusätzliche optische Faser (8), die zwischen dem Gehäuse (2) und dem Messinstrument (20) angeordnet ist.

10. Gerät (100) für die farbmetrische Auswertung nach Anspruch 9, ferner umfassend eine zweite Linse (10), die zwischen dem Gehäuse (2) der Probe und der zusätzlichen optischen Faser (8) angeordnet ist.

11. Verfahren zum Durchführen einer farbmetrischen Auswertung einer Flüssigkeitsprobe unter Verwendung eines Geräts (100) nach einem der Ansprüche 1 bis 10, umfassend die Schritte zum:

> Einschalten der LED-Lichtquellen (4);
> Erfassen der Lichtintensität ($I_{ref}$) der Strahlung stromabwärts des leeren Gehäuses (2);
> Einsetzen der Probe in das Gehäuse (2);
> Erfassen der Lichtintensität ($I_1$) der Strahlung stromabwärts des Gehäuses (2) in Anwesenheit der Probe;
> Berechnen der Absorption ($A_1$) der Probe als Funktion der in Abwesenheit der Probe erfassten Lichtintensität ($I_{ref}$) und der in Anwesenheit der Probe im Gehäuse (2) erfassten Lichtintensität ($I_1$).

12. Verfahren nach Anspruch 11, ferner umfassend einen ersten Schritt zum Erfassen der Dunkelintensität ($I_{dark}$), während die LED-Lichtquellen (4) ausgeschaltet und das Gehäuse (2) leer gehalten werden.

13. Verfahren nach Anspruch 12, wobei der Schritt zum Berechnen der Absorption ($A_1$) der Probe (C) durch Anwenden der folgenden Formel erhalten wird:

$$A_1 = \log_{10}\left((l_{ref} - l_{dark}) / (l_1 - l_{dark})\right).$$

14. Verfahren nach den Ansprüchen 11 bis 13, wobei ein jeder der Schritte zum Erfassen der Lichtintensität stromabwärts des Gehäuses (2) unter Verwendung einer beweglichen Vorrichtung (20) ausgeführt wird und die folgenden Teilschritte umfasst:

> Zwischenschalten einer zusätzlichen optischen Faser (8) zwischen dem Gehäuse (2) der Probe und einem optischen Sensor der beweglichen Vorrichtung (20);
> Lassen den optischen Sensor ein Farbbild der zusätzlichen optischen Faser (8) erfassen;
> Extrahieren der roten, grünen und blauen Kanäle aus dem Farbbild;
> Identifizieren eines Bereichs von Interesse in dem Bild; Erhalten der Lichtintensität als mittlere Intensität der Pixel in dem Bereich von Interesse.

15. Verfahren nach den Ansprüchen 11 bis 13, wobei ein jeder der genannten Schritte zum Erfassen der Lichtintensität stromabwärts des Gehäuses (2) unter Verwendung eines Mikrospektrometers (20) mit mindestens einem Sensor zum Erfassen der Lichtintensität durchgeführt wird und die folgenden Unterschritte umfasst:

> Lassen den Sensor Lichtintensitäten erfassen, die einer Vielzahl an Pixeln entsprechen;
> Auswählen der Lichtintensität entsprechend der interessierenden Wellenlänge für die aktuelle farbmetrische Auswertung.

**Revendications**

1. Appareil (100) pour l'analyse colorimétrique d'un liquide d'essai, comprenant : un dispositif optoélectronique (1) comprenant :

- un logement (2) pour ledit liquide d'essai ;
- une pluralité de sources lumineuses (4) à LED qui émettent un rayonnement de diverses longueurs d'onde, comprises entre 100 nm et 10 µm ;
- une unité de commande servant à commander lesdites sources lumineuses (4) à LED ;
- un faisceau de fibres optiques (6) disposé de manière à recevoir en entrée le rayonnement lumineux émis par les sources lumineuses (4) à LED et le transmettre en direction dudit logement (2) ; et

un instrument de mesure (20) servant à mesurer l'intensité lumineuse et situé en aval du logement (2) par rapport au trajet du rayonnement lumineux, **caractérisé en ce que** ledit dispositif optoélectronique (1) comprend de plus :

- un guide de lumière (7) situé en amont dudit logement (2) par rapport au trajet du rayonnement lumineux provenant des sources lumineuses (4) à LED, ledit faisceau de fibres optiques (6) étant interposé entre les sources lumineuses (4) à LED et ledit guide de lumière (7), ledit guide de lumière (7) mélangeant les différentes composantes spectrales provenant des sources lumineuses (4) à LED et fournissant un faisceau uniforme en sortie vers ledit logement (2) ;
- une pluralité de micro-lentilles (14) obtenues sur une section d'entrée (7a) dudit guide de lumière (7), chacune desdites micro-lentilles (14) recevant le rayonnement de l'une desdites fibres optiques (6) dans le faisceau.

2. Appareil (100) pour l'analyse colorimétrique selon la revendication 1, dans lequel ledit dispositif optoélectronique (1) comprend de plus une première lentille (9) servant à collimater le rayonnement lumineux et interposée entre le guide de lumière (7) et le logement (2) dudit échantillon.

3. Appareil (100) pour l'analyse colorimétrique selon la revendication 1 ou 2, dans lequel ledit guide de lumière (7) est formé sous la forme d'un prisme ayant une première base faisant face au faisceau de fibres optiques (6) afin de recevoir le rayonnement lumineux en entrée, et une seconde base faisant face au logement (2) dudit échantillon afin d'envoyer le rayonnement lumineux rendu uniforme à ce dernier.

4. Appareil (100) d'analyse colorimétrique selon les revendications 1 à 3, dans lequel ledit guide de lumière (7) est réalisé en silicone ou en polyméthacrylate de méthyle ou en polycarbonate ou en verre.

5. Appareil (100) d'analyse colorimétrique selon l'une quelconque des revendications précédentes, dans lequel lesdites fibres optiques (6) sont en polyméthacrylate de méthyle ou en silice ou en verre mou.

6. Appareil (100) d'analyse colorimétrique selon l'une quelconque des revendications précédentes, dans lequel ledit dispositif optoélectronique (1) comprend de plus une batterie d'alimentation (12).

7. Appareil (100) d'analyse colorimétrique selon l'une quelconque des revendications précédentes, dans lequel ledit instrument de mesure (20) consiste en un dispositif mobile qui comporte un capteur optique.

8. Appareil (100) d'analyse colorimétrique selon les revendications 1 à 6, dans lequel ledit instrument de mesure (20) est un micro-spectromètre.

9. Appareil (100) d'analyse colorimétrique selon l'une quelconque des revendications précédentes, comprenant une fibre optique (8) supplémentaire interposée entre ledit logement (2) et ledit instrument de mesure (20).

10. Appareil (100) d'analyse colorimétrique selon la revendication 9, comprenant de plus une deuxième lentille (10) interposée entre ledit logement (2) de l'échantillon et ladite fibre optique (8) supplémentaire.

11. Méthode pour réaliser une analyse colorimétrique d'un liquide d'essai en utilisant un appareil (100) selon l'une quelconque des revendications 1 à 10, comprenant les étapes de :

allumer les sources lumineuses (4) à LED ;
détecter l'intensité lumineuse ($I_{ref}$) du rayonnement en aval dudit logement vide (2) ;
introduire ledit échantillon dans le logement (2) ;
détecter l'intensité lumineuse ($I_1$) du rayonnement en aval dudit logement (2) en présence de l'échantillon ;
calculer l'absorbance ($A_1$) de l'échantillon en fonction de l'intensité lumineuse ($I_{ref}$) détectée en l'absence de l'échantillon et de l'intensité lumineuse ($I_1$) détectée en présence de l'échantillon dans le logement (2).

**EP 3 179 231 B1**

**12.** Méthode selon la revendication 11, comprenant de plus une étape initiale de détection de l'intensité d'obscurité ($I_{dark}$), tout en maintenant les sources lumineuses (4) à LED éteintes et le logement (2) vide.

**13.** Méthode selon la revendication 12, dans laquelle ladite étape de calcul de l'absorbance ($A_1$) de l'échantillon (C) est obtenue en appliquant la formule suivante :

$$A_1 = \log_{10}\left((l_{ref} - l_{dark}) / (l_1 - l_{dark})\right).$$

**14.** Méthode selon les revendications 11 à 13, dans laquelle chacune desdites étapes de détection de l'intensité lumineuse en aval du logement (2) est réalisée à l'aide d'un dispositif mobile (20) et comprend les sous-étapes suivantes :

interposer une fibre optique (8) supplémentaire entre le logement (2) de l'échantillon et un capteur optique du dispositif mobile (20) ;
faire acquérir par ledit capteur optique une image couleur de ladite fibre optique (8) supplémentaire ;
extraire les canaux rouge, vert et bleu de ladite image couleur ;
identifier une zone d'intérêt dans l'image ;
obtenir l'intensité lumineuse comme l'intensité moyenne des pixels dans ladite zone d'intérêt.

**15.** Méthode selon les revendications 11 à 13, dans laquelle chacune desdites étapes de détection de l'intensité lumineuse en aval du logement (2) est réalisée en utilisant un micro-spectromètre (20) comportant au moins un capteur pour détecter l'intensité lumineuse et comprend les sous-étapes suivantes :

faire acquérir par le capteur des intensités lumineuses correspondant à une pluralité de pixels ;
sélectionner l'intensité lumineuse correspondant à la longueur d'onde d'intérêt pour l'analyse colorimétrique en cours.

## FIG. 1

## FIG. 2a

FIG. 2b

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2497750 A
- US 6741875 B1
- US 20040157341 A1